# EUROPEAN PATENT APPLICATION

(11) **EP 3 905 837 A1**
(43) Date of publication of application: **03.11.2021**
(21) Application number: 19902400.1
(22) Date of filing: 15.11.2019
(51) Int. Cl.: H04W 76/27

(54) **CELL CHANGING METHOD, DEVICE, STORAGE MEDIUM, AND TERMINAL**

(30) Priority: 28.12.2018 CN 201811622444
(71) Applicant: Spreadtrum Communications (Shanghai) Co., Ltd., Shanghai 201203 (CN)
(72) Inventor: HAN, Lifeng, Shanghai 201203 (CN); SHEN, Xingya, Shanghai 201203 (CN)
(74) Representative: Nordmeyer, Philipp Werner
(86) International application number: PCT/CN2019/118753
(87) International publication number: WO 2020/134680

(57) **Abstract**

A cell changing method, a device, a storage medium, and a terminal. The cell changing method comprises: executing a listen-before-talk operation on the basis of an unlicensed spectrum resource; and, if the execution of the listen-before-talk operation fails consecutively, then executing a cell selection or cell reselection. The technical solution of the present invention increases the success rate of an RRC connection in a case of consecutive failures of unlicensed spectrum LBT, thus effectively solving the problem of an RRC connection failure.

## Description

### CROSS-REFERENCE TO RELATED APPLICATIONS

This application claims the benefit of priority to Chinese Patent Application No. 201811622444.3, filed on December 28, 2018, and entitled "CELL CHANGING METHOD, DEVICE, STORAGE MEDIUM, AND TERMINAL", the entire disclosure of which is incorporated herein by reference.

### TECHNICAL FIELD

The present disclosure generally relates to radio communication technology field, and more particularly, to a cell changing method and device, a storage medium and a terminal.

### BACKGROUND

The 3rd Generation Partnership Project (3GPP) standards organization will study how to deploy the Fifth-Generation mobile communications (5G) New Radio (NR) system on unlicensed spectrums, so as to achieve fair and effective use of the unlicensed spectrums and increase data transmission rate of the NR system. The NR system using the unlicensed spectrum technology is also known as New RAT Unlicense (NR-U) technology.

For the use of unlicensed spectrums, different countries have different control methods. For example, the unlicensed spectrums may be used in the manner of Listen-Before-Talk (LBT). The LBT procedure is as follows. Before communication between a transmitter and a receiver, a Clear Channel Assessment (CCA) is required. If an assessment result is that a channel is idle, the data is transmitter immediately; otherwise, data cannot be transmitted until the end of a next fixed frame period. The fixed frame is composed of a Channel Occupancy Time (COT) and an idle period, where the COT is 1 millisecond (ms) to 10 ms, and a minimum idle period is 5% of the COT.

In a 5G NR communication system, User Equipment (UE) states include Radio Resource Control-Idle (RRC-Idle) state, an RRC-Inactive state and an RRC-Connected state. A UE entering the RRC-Connected state from the RRC-Idle state requires RRC connection establishment, and the UE entering the RRC-Connected state from the RRC-Inactive state requires an RRC connection resume procedure. However, in an unlicensed spectrum cell, both the RRC connection establishment and the RRC connection resume procedure require LBT. After the LBT successfully obtains a usage right of channel resources, relevant RRC messages can be sent to realize the RRC connection establishment or the RRC connection resume. If the UE fails to perform LBT consecutively (for example, LBT fails for more than 4 times), the UE cannot enter the RRC -Connected state, which may cause a transmission failure of subsequent data or signaling.

### SUMMARY

Embodiments of the present disclosure may improve an RRC connection success rate in the case of unlicensed spectrum based LBT consecutive failures, so as to effectively solve a problem of RRC connection failure.

In an embodiment of the present disclosure, a cell changing method is provided, including: performing LBT based on an unlicensed spectrum resource; and if the LBT fails consecutively, performing cell selection or cell reselection.

Optionally, before performing cell selection or cell reselection, the method further includes: measuring a cell, wherein the cell includes at least one of an intra-frequency cell, an inter-frequency cell or an inter-system cell.

Optionally, measuring the cell includes: determining whether to start or stop measurement for the cell based on a received signal strength indicator of the cell; and performing measurement on the cell where measurement is started or does not stop.

Optionally, determining whether to start or stop measurement for the cell based on a received signal strength indicator of the cell includes: if a value of the received signal strength indicator of the cell exceeds a first preset threshold, terminating or not starting the measurement of the cell.

Optionally, when performing cell selection or cell reselection, the method further includes: determining a cell whose received signal strength indicator has a value lower than a second preset threshold as a candidate target cell.

Optionally, measuring the cell includes: prioritizing measuring the inter-frequency cell or the inter-system cell.

Optionally, measuring the cell includes: receiving a measurement type configured by a network, wherein the measurement type includes at least one of intra-frequency measurement, inter-frequency measurement or inter-system measurement; and measuring the cell using the measurement type, after the LBT fails consecutively.

Optionally, if the LBT fails consecutively, performing cell selection or cell reselection includes: if the LBT fails consecutively when an RRC establishment request message, an RRC resume request message or an RRC resume request message 1 is sent, performing the cell reselection; and if the LBT fails consecutively when an RRC establishment complete message or an RRC resume complete message is sent, performing the cell selection.

Optionally, after performing the cell selection or cell reselection, the method further includes: if a target cell is accessed from a current cell, sending an RRC establishment request message, an RRC resume request message or an RRC resume request message 1 to a network to complete RRC connection, wherein the RRC establishment request message, the RRC resume request message or the RRC resume request message 1 includes an indicator which is used to indicate the occurrence of LBT consecutive failures.

Optionally, the method further includes: setting an access category for access control.

Optionally, before performing cell selection or cell reselection, the method further includes: if the LBT fails consecutively during an RRC connection resume procedure initiated by a RAN-Based Notification Area (RNA) update, setting a value of a pending RNA update to be true.

Optionally, after performing the cell selection or cell reselection, the method further includes: if a target cell is accessed from a current cell based on cell selection, performing an RRC connection resume procedure based on the target cell to perform the RNA update.

Optionally, performing the RRC connection resume procedure to perform the RNA update includes: sending an RRC resume request message or an RRC resume request message 1, wherein the RRC resume request message or the RRC resume request message 1 includes indication information which is used to indicate that the RNA update is a pending RNA update.

In an embodiment of the present disclosure, a cell changing device is provided, including: a first performing circuitry configured to perform LBT based on an unlicensed spectrum resource; and a second performing circuitry configured to: if the LBT fails consecutively, perform cell selection or cell reselection.

In an embodiment of the present disclosure, a storage medium having computer instructions stored therein is provided, wherein when the computer instructions are executed, the above cell changing method is performed.

In an embodiment of the present disclosure, a terminal including a memory and a processor is provided, wherein the memory has computer instructions stored therein, and when the processor executes the computer instructions, the above cell changing method is performed.

Embodiments of the present disclosure may provide following advantages.

In embodiments of the present disclosure, a cell changing method is provided, including: performing LBT based on an unlicensed spectrum resource; and if the LBT fails consecutively, performing cell selection or cell reselection. In a case that the unlicensed spectrum based LBT fails consecutively, with solutions provided in the embodiments of the present disclosure, the cell selection or cell reselection is performed to obtain a suitable cell so as to re-execute LBT. Further, RRC connection may be performed after obtaining the suitable cell, which provides a feasible solution for the RRC connection, is beneficial to effectively solve a problem of RRC connection failure, and improves an RRC connection success rate and network performance.

Further, before performing the cell selection or cell reselection, the method further includes measuring a cell, wherein the cell includes at least one of an intra-frequency cell, an inter-frequency cell or an inter-system cell. With the solutions provided in the embodiments of the present disclosure, cell measurement is performed to preliminarily determine an interference situation of each cell, thereby increasing possibility of selecting a suitable cell, and effectively avoiding subsequent LBT failures.

Further, before performing cell selection or cell reselection, the method further includes: if the LBT fails consecutively during an RRC connection resume procedure initiated by an RNA update, setting a value of a pending RNA update to be true. With the solutions provided in the embodiments of the present disclosure, if the LBT fails consecutively during the RRC connection resume procedure initiated by the RNA update, the pending RNA update procedure may be performed, and the RRC connection resume procedure may be initiated again when a condition (timer T302 or timer T390 expires or stops) is met, so as to complete an RNA update, which may be conducive to overcoming impact of LBT consecutive failures on RNA update.

Further, performing the RRC connection resume procedure to perform the RNA update includes: sending an RRC resume request message or an RRC resume request message 1, wherein the RRC resume request message or the RRC resume request message 1 includes indication information which is used to indicate that the RNA update is a pending RNA update. With the solutions provided in the embodiments of the present disclosure, the indication information indicating that the RNA update is the pending RNA update may be added to the RRC resume request message or the RRC resume request message 1, so that the network side can better perform radio resource management, which may reduce impact of LBT consecutive failures on RRC connection management.

### BRIEF DESCRIPTION OF THE DRAWINGS

Figure 1 is a flow chart of a cell changing method according to an embodiment;
Figure 2 is a signaling interaction diagram of a typical scenario according to an embodiment;
Figure 3 is a signaling interaction diagram of another typical scenario according to an embodiment; and
Figure 4 is a structural diagram of a cell changing device according to an embodiment.

### DETAILED DESCRIPTION

As described in the background, in the existing techniques, LBT is performed repeatedly. If the LBT fails consecutively, in a scenario where a load or interference of a cell is relatively large, a UE may continue to perform RRC connection establishment or an RRC connection resume procedure, and may always fail.

The LBT consecutive failures may mean that a terminal performs LBT, and a number of LBT consecutive failures exceeds a preset number or a number of LBT consecutive failures within a preset time period exceeds a preset threshold. The preset number of LBT consecutive failures, the preset time period and the preset threshold may be configured on the network side and notified to the terminal via a dedicated message (for example, RRC signaling) or a public message (System Information, referred to as SI).

For example, the preset number of LBT consecutive failures configured on the network side may be 8. Under this condition, if the LBT fails 8 times consecutively, it indicates that the terminal has an LBT consecutive failure event. For another example, the preset number of LBT consecutive failures configured on the network side may be 8, and the time threshold is 10s. Under this condition, if the LBT fails 8 times consecutively within 10s, it indicates that the terminal has an LBT consecutive failure event.

In embodiments of the present disclosure, a cell changing method is provided, including: performing LBT based on an unlicensed spectrum resource; and if the LBT fails consecutively, performing cell selection or cell reselection. In a case that the unlicensed spectrum based LBT fails consecutively, with solutions provided in the embodiments of the present disclosure, the cell selection or cell reselection is performed to obtain a suitable cell so as to re-execute LBT. Further, RRC connection may be performed after obtaining the suitable cell, which provides a feasible solution for the RRC connection, is beneficial to effectively solve a problem of RRC connection failure, and improves an RRC connection success rate and network performance.

In order to clarify the objects, characteristics and advantages of the disclosure, embodiments of present disclosure will be described in detail in conjunction with accompanying drawings.

The embodiments of the present disclosure are applicable to a 5G NR communication system, a 4G communication system, a 3G communication system and various subsequently evolved communication systems, such as 6G, 7G and the like. The embodiments of the present disclosure are also applicable to different network architectures including but not limited to relay network architectures, dual link architectures and Vehicle-to-Everything communication architectures.

The network side in the embodiments of the present disclosure may include a 5G New Core (5G-CN), or a Next Generation Core (NGC) and the like. The 5G-CN is provided independently of existing core networks, such as an Evolved Packet Core (EPC).

The network side in the embodiments of the present disclosure may refer to a Base Station (BS) of a radio access network, and may further include a network element in a core network. The BS may also be referred to as a base station equipment, and is a device deployed in a wireless access network to provide wireless communication functions. For example, an equipment that provides a base station function in a 2G network includes a Base Transceiver Station (BTS) and a Base Station Controller (BSC). An equipment that provides the base station function in a 3G network includes a Node B and a Radio Network Controller (RNC). An equipment that provides the base station function in a 4G network includes an evolved node B (eNB). In a Wireless Local Area Network (WLAN), an equipment that provides the base station function is an Access Point (AP). An equipment that provides the base station function in a 5G New Radio (NR) includes a continuously evolved Node B (gNB). And the base station also refers to an equipment that provides the base station function in a new communication system in the future.

A terminal in the embodiments of the present disclosure may refer to various forms of User Equipment (UE), access terminal, user unit, user station, Mobile Station (MS), remote station, remote terminal, mobile equipment, user terminal, terminal equipment, wireless communication equipment, user agent or user device. The terminal equipment may further be a cellular phone, a cordless phone, a Session Initiation Protocol (SIP) phone, a Wireless Local Loop (WLL) station, a Personal Digital Assistant (PDA), a handheld device with a wireless communication function, a computing device or other processing devices connected to a wireless modems, an in-vehicle device, a wearable device, a terminal equipment in the future 5G network, or a terminal equipment in a future evolved Public Land Mobile Network (PLMN), which is not limited in the embodiments of the present disclosure.

It should be understood that the term "and/or" in the present disclosure is merely an association relationship describing associated objects, indicating that there can be three types of relationships, for example, A and/or B can represent "A exists only, both A and B exist, B exists only. In addition, the character "/" in the present disclosure represents that the former and latter associated objects have an "or" relationship.

The "plurality" in the embodiments of the present disclosure refers to two or more.

The descriptions of the first, second, etc. in the embodiments of the present disclosure are merely for illustrating and differentiating the objects, and do not represent the order or the particular limitation of the number of devices in the embodiments of the present disclosure, which do not constitute any limitation to the embodiments of the present disclosure.

The "connection" in the embodiments of the present disclosure refers to various connection ways such as direct connection or indirect connection to realize communication between devices, which is not limited in the embodiments of the present disclosure.

The "Network" and "system" in the embodiments of the present disclosure represent a same concept, and a communication system is a communication network.

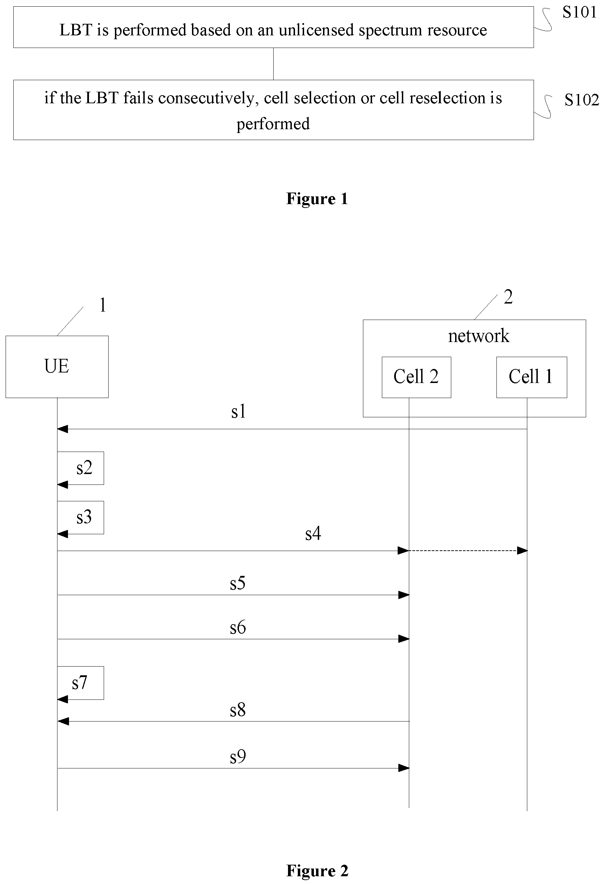

Referring to Figure 1, Figure 1 is a flow chart of a cell changing method according to an embodiment. The method may be applied in a terminal, such as performed by an NR UE, and may include S101 and S102.

In S101, LBT is performed based on an unlicensed spectrum resource.

In S102, if the LBT fails consecutively, cell selection or cell reselection is performed.

In some embodiments, the terminal is deployed in the unlicensed spectrum resource. In S101, the terminal may perform LBT in the unlicensed spectrum resource to enter an RRC connected state from the RRC idle state, or enter the RRC connected state from the RRC inactive state. After the UE fails to perform LBT for the first time in a current cell, it may perform LBT again.

In S102, if the terminal fails to perform LBT consecutively, the terminal may try to select another cell to perform LBT again to enter the RRC connected state from the RRC idle state or the RRC inactive state. The LBT consecutive failure means that the LBT is performed more than two times, and each LBT fails.

In some embodiments, if the LBT fails consecutively, the terminal may perform cell selection or cell reselection to achieve RRC connection.

In some embodiments, before performing cell selection or cell reselection, the terminal may measure cells to select a target cell with less interference, which is conducive to subsequent LBT successfully competing for spectrum resources.

The measurement of cells may include one or more of intra-frequency cell measurement, inter-frequency cell measurement and inter-system cell measurement. As the interference of intra-frequency cells may also be great, to improve success probability of subsequent LBT contention, the terminal may prioritize performing inter-frequency cell measurement and/or inter-system cell measurement. Inter-system refers to a radio communication system different from the NR-U system.

Further, before measuring the cell, the terminal may receive measurement configuration information from the network side. The measurement configuration information may indicate a measurement type that the terminal starts after the occurrence of LBT consecutive failure event, including one or more of intra-frequency measurement, inter-frequency measurement and inter-system measurement. In some embodiments, the network side may notify the terminal of the measurement configuration information via dedicated RRC signaling or system information. The terminal may perform measurement operations for cell reselection or cell selection based on the measurement configuration information.

In some embodiments, the terminal may determine whether to terminate or not start certain measurements based on a Received Signal Strength Indicator (RSSI) of different frequencies or different systems. Further, when performing cell selection or cell reselection, the terminal may determine a cell whose RSSI value is lower than a second preset threshold as a candidate target cell.

For example, if an RSSI value of an inter-frequency cell exceeds a first preset threshold, the terminal may stop or not start the measurement of the inter-frequency cell. For another example, if an RSSI value of an inter-system cell exceeds the first preset threshold, the terminal may also stop or not start the measurement of the inter-system cell. For another example, if RSSI values of inter-frequency cells are lower than the second preset threshold, the terminal may determine the inter-frequency cells as candidate target cells, and select a cell from the candidate target cells as a target cell based on a cell selection rule or a cell reselection rule. The terminal leaves the current cell and camps on the target cell. For example, the cell selection rule may be to select a cell with highest signal quality on a frequency where RSRP is higher than a certain threshold and Reference Signal Received Quality (RSRQ) is higher than a certain threshold.

Alternatively, if the terminal is in an RRC inactive state and has not performed a Radio access network-based Notification Area (RNA) update, the terminal may set a value of a variable pendingRnaUpdate to be TRUE before cell selection or cell reselection. The variable pendingRnaUpdate may indicate whether there is a pending RNA update procedure.

Specific embodiments are described below in detail.

In an embodiment, after the LBT fails consecutively, the terminal in the RRC idle state performs cell reselection or cell selection.

Specifically, the terminal in the RRC idle state initiates an RRC connection establishment procedure, where an RRC setup request (RRCSetupRequest) message may be sent first. If LBT consecutive failures occur when sending the RRCSetupRequest message, the terminal may perform cell reselection to select a target cell. Further, if LBT consecutive failures occur when sending an RRC setup complete (RRCSetupComplete) message, the terminal may perform cell selection to reselect a target cell.

In some embodiments, to send the RRCSetupRequest message, the terminal needs to perform LBT. If an LBT consecutive failure event occurs, the terminal may measure at least one of an intra-frequency cell, an inter-frequency cell or an inter-system cell. For example, regardless of restriction of signal quality of serving cells, measurement is directly performed on the intra-frequency cell, the inter-frequency cell and the inter-system cell to perform cell reselection.

Further, when the terminal in the RRC idle state starts the measurement for cell reselection, it may prioritize performing the inter-frequency cell or the inter-system cell measurement. As if an LBT consecutive failure event occurs, it means that interference of intra-frequency neighboring cells may also be large. Therefore, to reduce probability of subsequent LBT failures, the terminal may prioritize measuring the inter-frequency cells and the inter-system cells.

Further, the terminal in the RRC idle state may determine to terminate measurement of a certain cell or certain cells based on RSSI of different frequencies or systems. For example, if an RSSI value of inter-frequency bands exceeds a preset threshold x, the terminal may terminate the inter-frequency cell measurement. Or, the terminal in the RRC idle state may determine not to start measurement of a certain cell or certain cells based on RSSI of different frequencies or systems. For example, if an RSSI value of inter-frequency bands exceeds the preset threshold x, the terminal may terminate or not start measurement of a certain inter-frequency cell or certain inter-frequency cells. The inter-frequency bands may be unlicensed spectrum resources. The network side may notify the terminal of the preset threshold x in advance via dedicated RRC signaling or system information.

Further, the network side may pre-configure a measurement type for the terminal in the RRC idle state and operating on the unlicensed spectrum resource, so that the terminal can initiate intra-frequency, inter-frequency and/or inter-system measurement after the occurrence of an LBT consecutive failure event. The network side may use dedicated RRC signaling or system information to notify the terminal in advance of the measurement type to be started after the occurrence of the LBT consecutive failure event. The terminal starts the measurement of the corresponding measurement type after the occurrence of the LBT consecutive failure event, where the measurement is used for cell reselection.

Further, in the RRC connection establishment procedure, if the terminal in the RRC idle state performs LBT for sending the RRCSetupComplete message, and the LBT fails consecutively, the terminal may perform cell selection to perform an RRC connection re-establishment procedure. Preferably, the terminal may preferentially select an inter-frequency cell or an inter-system cell to avoid an LBT failure. Preferably, the terminal may select a cell whose RSSI value is lower than a preset threshold y which may be used for frequency bands of unlicensed spectrums. The network side may notify the terminal of the preset threshold y in advance via dedicated RRC signaling or system information.

In an embodiment, after the LBT fails consecutively, the terminal in the RRC inactive state performs cell reselection or cell selection.

If LBT consecutive failures occur when sending an RRC connection resume (RRCResumeRequest or RRCResumeRequest1) message, the terminal may perform cell reselection to select a target cell. If LBT consecutive failures occur when sending an RRC resume complete (RRCResumeComplete) message, the terminal may perform cell selection to reselect a target cell.

In some embodiments, when the terminal in the RRC inactive state initiates the RRC connection resume procedure, to send the RRCResumeRequest message or the RRCResumeRequest1 message, the terminal needs to perform LBT. If an LBT consecutive failure event occurs, the terminal may initiate cell measurement for at least one of an intra-frequency cell, an inter-frequency cell or an inter-system cell. That is, regardless of restriction of signal quality of serving cells, cell reselection of the terminal is triggered by the LBT consecutive failure event. In this case, the terminal is still in the RRC inactive state.

Further, when the terminal starts the measurement for cell reselection, it may prioritize performing the inter-frequency cell or the inter-system cell measurement, as interference of intra-frequency neighboring cells may also be large and probability of an LBT failure even may be relatively high.

Further, the terminal may determine to terminate or not start some measurement based on RSSI of different frequencies or systems. For example, if an RSSI value of inter-frequency bands exceeds a preset threshold x, the terminal may terminate or not start the inter-frequency band measurement. The inter-frequency bands may be unlicensed spectrum resources. The network side may notify the terminal of the preset threshold x in advance via dedicated RRC signaling or system information.

Further, the network side may pre-configure a measurement type for the terminal via dedicated RRC signaling or system information, so that the terminal can initiate measurement after the occurrence of an LBT consecutive failure event, where the measurement type may include at least one of intra-frequency cell measurement, inter-frequency cell measurement or inter-system cell measurement, and the measurement is used for cell reselection.

Further, in the RRC connection resume procedure, if the LBT consecutive failure event occurs during transmission of the RRCResumeComplete message, the terminal may perform cell selection to perform an RRC connection re-establishment procedure, where the terminal is in an RRC connected state. Preferably, the terminal may preferentially select an inter-frequency cell or an inter-system cell to perform the RRC connection re-establishment to avoid an LBT failure. Preferably, the terminal may select a cell whose RSSI value is lower than a preset threshold y which may be used for frequency bands of unlicensed spectrums. The network side may notify the terminal of the preset threshold y in advance via dedicated RRC signaling or system information.

Those skilled in the art could understand that after the LBT consecutive failures, cell reselection or cell selection is triggered by the terminal in the RRC idle state or the RRC inactive state, so that the terminal can select a suitable cell for RRC connection establishment, which is conducive to improving success probability of subsequent RRC connection establishment of the terminal, and enhancing network performance.

In an embodiment, after the terminal accesses the target cell from the current cell via cell reselection or cell selection, it may choose to camp on the target cell.

The terminal may initiate an RRC connection establishment or RRC connection resume procedure in the target cell. In the sent RRCSetupRequest message, RRCResumeRequest message, or RRCResumeRequest1 message, the terminal may add an indicator to indicate that the LBT consecutive failure event has occurred. The indicator may be a cause value, which indicates "the LBT consecutive failure event has occurred". The cause value of "the LBT consecutive failure event has occurred" indicates that the LBT consecutive failure event occurred when the terminal initiates the RRC connection establishment or the RRC connection resume procedure in the cell where the terminal resides before the target cell, which causes the terminal to perform cell reselection or cell selection and enter the target cell.

After receiving the RRCSetupRequest message, the RRCResumeRequest message, or the RRCResumeRequest1 message, the network side may perform special processing on the terminal in radio resource management based on the cause value "the LBT consecutive failure event has occurred". For example, a cell access condition may be relaxed so that the terminal can access the target cell, or the number of rejection operations for the RRC connection request including the cause value "the LBT consecutive failure event has occurred" may be reduced.

Further, when the terminal initiates the RRC connection establishment or RRC connection resume procedure, if the cause is "the LBT consecutive failure event has occurred", the terminal may set an access category for access control, so that the terminal has high probability of successful access when performing the access control.

Further, the terminal may set the access category to category 2 or category 0, so that it can pass access control.

The terminal adds the indicator indicating "the LBT consecutive failure event has occurred" in the RRCSetupRequest message, the RRCResumeRequest message and/or the RRCResumeRequest1 message, so that the network side can learn about the event of the terminal, and further better perform radio resource management according to a situation of the terminal, and reduce impact on the RRC connection management caused by the LBT consecutive failure event.

In an embodiment, the terminal in the RRC inactive state initiates the RRC connection resume procedure due to an RNA update.

If the LBT fails consecutively when the terminal sends the RRCResumeRequest message or the RRCResumeRequest1 message, the terminal may set a value of a variable pendingRnaUpdate to be true to indicate that there is a pending RNA update procedure.

In some embodiments, if the value of the variable pendingRnaUpdate is true, it indicates that there is a pending RNA update procedure, and the terminal can initiate the RRC connection resume procedure again when a certain condition is met. The certain condition may be a delay for a time period, or blocking of an access category of RNA update in access control becomes lighter (for example, timer T302 or T390 expires or stops), or other conditions, which is not limited here. By executing the pending RNA update after the LBT consecutive failures, and re-initiating the RRC connection resume procedure when the condition is met, the RNA update is completed, and impact of the LBT consecutive failures on the RNA update may be overcome.

Further, if the value of the variable pendingRnaUpdate is true, and the terminal in the RRC inactive state camps on the target cell by performing cell reselection, the terminal may initiate the RRC connection resume procedure in the target cell.

Further, the terminal may initiate the RRC connection resume procedure in the target cell to perform the RNA update. Specifically, the terminal may carry indication information in the RRCResumeRequest message or the RRCResumeRequest1 message, where the indication information may be used to indicate that the initiated RNA update is a pending RNA update.

Signaling interaction between a terminal (for example, a UE) and a network (for example, an NR base station) adopting the embodiments of the present disclosure is further described below in conjunction with typical application scenarios.

Referring to Figure 2, in a typical application scenario, after a UE 1 accesses a cell 1 in a network 2, a base station to which the cell 1 belongs (represented by cell 1 in Figure 2) may first perform s1, that is, send measurement configuration information to the UE 1 in advance. The measurement configuration information may be used to indicate a measurement type that the UE 1 can start after the LBT consecutive failure event occurs.

Afterward, the UE 1 performs s2, that is, enters the RRC idle state or the RRC inactive state, or is in the RRC idle state or the RRC inactive state, and acquires the measurement configuration information from the network 2 via system information.

Afterward, the UE 1 expects to transmit data and performs s3, that is, performs LBT, and the LBT fails consecutively.

Further, the UE 1 performs s4, that is, performs cell measurement based on the measurement configuration information.

Further, the UE 1 performs s5, that is, the UE 1 performs cell reselection or cell selection, leaving cell 1 and camping on cell 2.

Further, the UE performs s6, that is, the UE 1 sends the RRCSetupRequest message, the RRCResumeRequest message or the RRCResumeRequest1 message in the cell 2 where an indicator for indicating that the LBT consecutive failure event has occurred is added.

Further, the UE performs s7, that is, the UE 1 sets an access category to increase success probability of subsequent LBT contention.

Further, the base station to which cell 2 belongs (represented by cell 2 in Figure 2) performs s8, that is, sends messages in the RRC connection establishment, RRC connection re-establishment, and RRC connection resume procedures, including any of the RRCsetup message, the RRCReestablishment message, the RRCResume message, the RRCRelease message, RRCReject message and etc..

Further, the UE 1 performs s9, that is, the UE 1 sends an RRCSetupComplete message, an RRCReestablishmentComplete message or an RRC ReestablishmentComplete message. So far, the UE 1 enters the RRC connected state from the RRC idle state or the RRC inactive state.

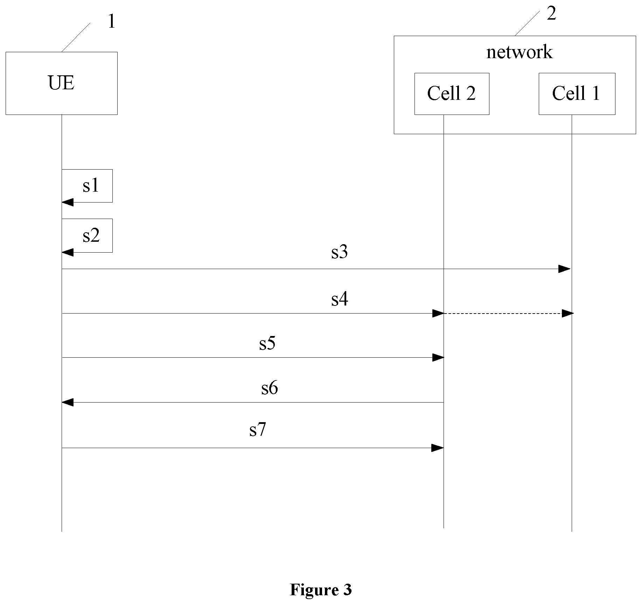

In another typical application scenario, referring to Figure 3, after the UE 1 accesses the cell 1 in the network 2, it enters the RRC inactive state. Afterward, if the UE 1 needs to perform the RRC connection resume procedure to perform an RNA update, the UE 1 may perform s1, that is, perform LBT to send the RRCResumeRequest message or the RRCResumeRequest1 message.

Further, if the LBT fails consecutively, the UE 1 may perform s2, that is, set a value of a variable pendingRnaUpdate to be true.

Further, the UE 1 may perform s3, that is, when a certain condition is met, the UE 1 initiates the RRC connection resume procedure again in the cell 1. The certain condition may be a delay of a certain time period, or blocking of an access category of RNA update in access control becomes lighter (for example, timer T302 or T390 expires or stops), or other conditions.

Further, the UE 1 may perform s4, that is, perform cell selection or cell reselection, leaving cell 1 and camping on cell 2.

Further, the UE 1 may perform s5, that is, the UE 1 sends the RRCResumeRequest message or the RRCResumeRequest1 message in the cell 2 which message carries indication information used to indicate that the initiated RNA update is a pending RNA update.

Further, after the cell 2 receives the RRC message from the UE 1, s6 is performed, that is, the RRCResume message is sent.

Further, the UE 1 performs s7, that is, sends an RRCResumeComplete message. So far, the UE 1 enters the RRC connected state from the RRC inactive state.

From above, with the solutions provided by the embodiments of the present disclosure, after the terminal deployed on the unlicensed spectrum resource fails in LBT consecutively, the terminal may camp on another cell by performing cell selection or cell reselection. Further, the terminal may re-execute the RRC connection establishment procedure or the RRC connection resume procedure, to enter the RRC connected state from the RRC idle state or the RRC inactive state.

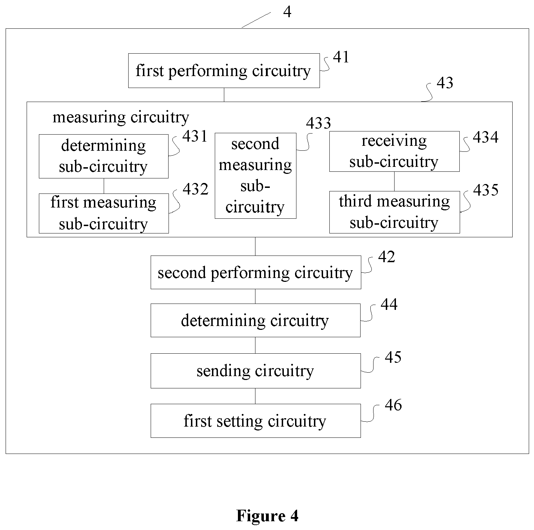

Figure 4 is a structural diagram of a cell changing device according to an embodiment. The cell changing device 4 is applied in a terminal, to implement the cell changing method as shown in Figures 1 to 3.

The cell changing device 4 includes: a first performing circuitry 41 configured to perform LBT based on an unlicensed spectrum resource; and a second performing circuitry 42 configured to: if the LBT fails consecutively, perform cell selection or cell reselection.

In some embodiments, the cell changing device 4 further includes a measuring circuitry 43 configured to: before cell selection or cell reselection is performed, measure a cell, wherein the cell includes at least one of an intra-frequency cell, an inter-frequency cell or an inter-system cell.

In some embodiments, the cell changing device 4 further includes a determining circuitry 44 configured to: when cell selection or cell reselection is performed, determine a cell whose received signal strength indicator has a value lower than a second preset threshold as a candidate target cell.

In some embodiments, the measuring circuitry 43 includes: a determining sub-circuitry 431 configured to determine whether to start or stop measurement for the cell based on a received signal strength indicator of the cell; and a first measuring sub-circuitry 432 configured to perform measurement on the cell where measurement is started or does not stop.

In some embodiments, the determining sub-circuitry 431 is further configured to: if a value of the received signal strength indicator of the cell exceeds a first preset threshold, terminate or not start the measurement of the cell.

In some embodiments, the measuring circuitry 43 includes a second measuring sub-circuitry 433 configured to prioritize measuring the inter-frequency cell or the inter-system cell.

In some embodiments, the measuring circuitry 43 includes: a receiving sub-circuitry 434 configured to receive a measurement type configured by a network, wherein the measurement type includes at least one of intra-frequency measurement, inter-frequency measurement or inter-system measurement; and a third measuring sub-circuitry 435 configured to measure the cell using the measurement type, after the LBT fails consecutively.

In some embodiments, the second performing circuitry 42 is configured to: if the LBT fails consecutively when an RRC establishment request message or an RRC connection resume message is sent, perform the cell reselection; and if the LBT fails consecutively when an RRC establishment complete message or an RRC resume complete message is sent, perform the cell selection.

In some embodiments, the cell changing device 4 further includes a sending circuitry 45 configured to: if a target cell is accessed from a current cell after the cell selection or the cell reselection is performed, send an RRC establishment request message or the RRC resume request message or the RRC resume request message 1 to a network to complete RRC connection, wherein the RRC establishment request message or the RRC resume request message or the RRC resume request message 1 includes an indicator which is used to indicate the occurrence of LBT consecutive failures. In some embodiments, the cell changing device 4 further includes a first setting circuitry 46 configured to set an access category for access control.

In some embodiments, the cell changing device 4 further includes a second setting circuitry (not shown) configured to: if the LBT fails consecutively during an RRC connection resume procedure initiated by an RNA update, set a value of a pending RNA update to be true.

In some embodiments, the cell changing device 4 further includes a third performing circuitry (not shown) configured to: after the cell selection or cell reselection is performed, if a target cell is accessed from a current cell based on cell selection, perform an RRC connection resume procedure based on the target cell to perform the RNA update.

In some embodiments, the third performing circuitry is further configured to send an RRC resume request message or an RRC resume request message 1, wherein the RRC resume request message or the RRC resume request message 1 includes indication information which is used to indicate that the RNA update is a pending RNA update.

More details about working principles and working modes of the cell changing device 4 as shown in Figure 4 can be found in the above descriptions of Figures 1 to 3, and are not described here.

In an embodiment of the present disclosure, a storage medium having computer instructions stored therein is provided, wherein when the computer instructions are executed, the above cell changing method as shown in Figures 1 to 3 is performed. In some embodiments, the storage medium may include a computer readable storage medium, such as a non-volatile memory or a non-transitory memory. The computer readable storage medium may include a Read Only Memory (ROM), a Random Access Memory (RAM), a magnetic disk or an optical disk.

In an embodiment of the present disclosure, a terminal including a memory and a processor is provided, wherein the memory has computer instructions stored therein, and when the processor executes the computer instructions, the above cell changing method as shown in Figures 1 to 3 is performed. In some embodiments, the terminal may be an NR UE.

It should be understood that, in the embodiments of the present disclosure, the processor may be a Central Processing Unit (CPU), or other general processors, Digital Signal Processors (DSPs), Application Specific Integrated Circuits (ASICs), Field Programmable Gate Arrays (FPGAs) or other Programmable logic devices, discrete gates or transistor logic devices, discrete hardware components, and the like. A general processor may be a microprocessor or the processor may be any conventional processor or the like.

It should also be understood that the memory in the embodiments of the present disclosure may be either volatile memory or nonvolatile memory, or may include both volatile and nonvolatile memories. The non-volatile memory may be a ROM, a Programmable ROM (PROM), an Erasable PROM (EPROM), an electrically Erasable EPROM (EEPROM), or a flash memory. The volatile memory may be a RAM which functions as an external cache. By way of example but not limitation, various forms of random access memory are available, such as Static Random Access Memory (SRAM), Dynamic Random Access Memory (DRAM), Synchronous Dynamic Random Access Memory (SDRAM), Double Data Rate Synchronous Dynamic Random Access Memory (DDR SDRAM), Enhanced SDRAM (ESDRAM), Synchlink DRAM (SLDRAM), and Direct Rambus RAM (DR RAM).

The above embodiments may be implemented in whole or in part by software, hardware, firmware or any combination thereof. When implemented in software, the above embodiments may be implemented in whole or in part in the form of a computer program product. The computer program product includes one or more computer instructions or computer programs. The procedures or functions according to the embodiments of the present disclosure are wholly or partially generated when the computer instructions or the computer programs are loaded or executed on a computer. The computer may be a general purpose computer, a special purpose computer, a computer network, or other programmable device. The computer instructions may be stored in a computer readable storage medium or transmitted from one computer readable storage medium to another computer readable storage medium, for example, the computer instructions may be transmitted from one website, computer, server or data center to another website, computer, server or data center by wire (e.g., infrared, wireless, microwave and etc.). The computer readable storage medium may be any available medium that can be accessed by a computer or a data storage device such as a server or a data center that contains one or more sets of available media. The available medium may be a magnetic medium (e.g., floppy disk, hard disk or magnetic tape), an optical medium (e.g., DVD), or a semiconductor medium. The semiconductor medium may be a solid disk.

It should be understood that, in the various embodiments of the present disclosure, sequence numbers of the above-mentioned processes do not represent an execution sequence, and the execution sequence of each process should be determined by its function and inherent logic, which does not limit an implementation process of the embodiments of the present disclosure.

In the above embodiments of the present disclosure, it should be understood that the disclosed method, device and system may be implemented in other ways. For example, the above device embodiments are merely illustrative, and for example, division of units is merely one logical division, and other divisions may be realized in practice, for example, a plurality of units or components may be combined or integrated into another system, or some features may be omitted, or not executed. Further, the shown or discussed mutual coupling or direct coupling or communication connection may be an indirect coupling or communication connection via some interfaces, devices or units, and may be in an electrical, mechanical or other form.

The units described as separate parts may or may not be physically separate, and parts shown as units may or may not be physical units, that is, may be disposed in one place, or may be distributed on a plurality of network units. Some or all of the units can be selected according to practical requirements to achieve the purpose of the solutions of the embodiments.

In addition, functional units in the embodiments of the present disclosure may be integrated in one processing unit, or each unit may be physically separate, or two or more units may be integrated in one unit. The integrated units can be realized in a form of hardware, or in a form of hardware plus a software functional unit.

The integrated units implemented in the form of the software functional unit may be stored in a computer readable storage medium. The software functional unit is stored in a storage medium and includes several instructions for causing a computer device (a personal computer, a server or a network device) to execute some steps of the methods in the embodiments of the present disclosure. And the storage medium may be a medium for storing program codes, such as a U disk, a removable hard disk, a ROM, a RAM, a magnetic disk or an optical disk.

Although the present disclosure has been disclosed above with reference to preferred embodiments thereof, it should be understood that the disclosure is presented by way of example only, and not limitation. Those skilled in the art can modify and vary the embodiments without departing from the spirit and scope of the present disclosure.

## Claims

1. A cell changing method, comprising:
performing Listen-Before-Talk (LBT) based on an unlicensed spectrum resource; and
if the LBT fails consecutively, performing cell selection or cell reselection.

2. The method according to claim 1, wherein before performing cell selection or cell reselection, the method further comprises:
measuring a cell, wherein the cell comprises at least one of an intra-frequency cell, an inter-frequency cell or an inter-system cell.

3. The method according to claim 2, wherein measuring the cell comprises:
determining whether to start or stop measurement for the cell based on a received signal strength indicator of the cell; and
performing measurement on the cell where measurement is started or does not stop.

4. The method according to claim 3, wherein determining whether to start or stop measurement for the cell based on a received signal strength indicator of the cell comprises:
if a value of the received signal strength indicator of the cell exceeds a first preset threshold, terminating or not starting the measurement of the cell.

5. The method according to claim 1, wherein when performing cell selection or cell reselection, the method further comprises:
determining a cell whose received signal strength indicator has a value lower than a second preset threshold as a candidate target cell.

6. The method according to claim 2, wherein measuring the cell comprises:
prioritizing measuring the inter-frequency cell or the inter-system cell.

7. The method according to claim 2, wherein measuring the cell comprises:
receiving a measurement type configured by a network, wherein the measurement type comprises at least one of intra-frequency measurement, inter-frequency measurement or inter-system measurement; and
measuring the cell using the measurement type, after the LBT fails consecutively.

8. The method according to claim 1, wherein if the LBT fails consecutively, performing cell selection or cell reselection comprises:
if the LBT fails consecutively when an RRC establishment request message, an RRC resume request message or an RRC resume request message 1 is sent, performing the cell reselection; and
if the LBT fails consecutively when an RRC establishment complete message or an RRC resume complete message is sent, performing the cell selection.

9. The method according to claim 1, wherein after performing the cell selection or cell reselection, the method further comprises:
if a target cell is accessed from a current cell, sending an RRC establishment request message, an RRC resume request message or an RRC resume request message 1 to a network to complete RRC connection,
wherein the RRC establishment request message, the RRC resume request message or the RRC resume request message 1 comprises an indicator which is used to indicate the occurrence of LBT consecutive failures.

10. The method according to claim 9, further comprising:
setting an access category for access control.

11. The method according to claim 1, wherein before performing cell selection or cell reselection, the method further comprises:
if the LBT fails consecutively during an RRC connection resume procedure initiated by a RAN-Based Notification Area (RNA) update, setting a value of a pending RNA update to be true.

12. The method according to claim 11, wherein after performing the cell selection or cell reselection, the method further comprises:
if a target cell is accessed from a current cell based on cell selection, performing an RRC connection resume procedure based on the target cell to perform the RNA update.

13. The method according to claim 12, wherein performing the RRC connection resume procedure to perform the RNA update comprises:
sending an RRC resume request message or an RRC resume request message 1, wherein the RRC resume request message or the RRC resume request message 1 comprises indication information which is used to indicate that the RNA update is a pending RNA update.

14. A cell changing device, comprising:
a first performing circuitry configured to perform Listen-Before-Talk (LBT) based on an unlicensed spectrum resource; and
a second performing circuitry configured to: if the LBT fails consecutively, perform cell selection or cell reselection.

15. A storage medium having computer instructions stored therein, wherein when the computer instructions are executed, the method of any one of claims 1 to 13 is performed.

16. A terminal comprising a memory and a processor, wherein the memory has computer instructions stored therein, and when the processor executes the computer instructions, the method of any one of claims 1 to 13 is performed.
